# EUROPEAN PATENT SPECIFICATION

(11) **EP 3 907 059 B1**
(45) Date of publication and mention of the grant of the patent: **06.09.2023**
(21) Application number: 21172146.9
(22) Date of filing: 04.05.2021
(51) Int. Cl.: B29C 65/02, B65B 51/30, B29K 101/12

(54) **TENSIONING DEVICE, PERFECTED WELDING UNIT AND CORRESPONDING WELDING METHOD**
SPANNVORRICHTUNG, PERFEKTIONIERTE SCHWEISSEINHEIT UND ENTSPRECHENDES SCHWEISSVERFAHREN
DISPOSITIF DE TENSION, UNITÉ DE SOUDAGE PERFECTIONNÉE ET PROCÉDÉ DE SOUDAGE CORRESPONDANT

(30) Priority: 04.05.2020 IT 202000009784
(43) Date of publication of application: 10.11.2021
(73) Proprietor: Universal Pack S.r.l., 47842 San Giovanni in Marignano (RN) (IT)
(72) Inventor: Donati, Pietro, 47842 San Giovanni in Marignano (RN) (IT)
(74) Representative: Petraz, Gilberto Luigi

(56) References cited:
- JP-A- 2007 039 050
- US-A1- 2015 251 782

## Description

### FIELD OF THE INVENTION

The present invention concerns a welding unit and method for a unit for forming and filling sachets, as well as a tensioning device able to be associated with the welding unit. In particular, the invention concerns a welding unit to transversely weld the material of the sachets supplied in the form of a film, in relation to a direction of feed. The tensioning device is provided to stretch the film to be welded transversely. The formation and filling unit for the sachets is in particular intended for an apparatus for packaging sachets containing, by way of non-restrictive example, food, pharmaceutical or cosmetic products.

### BACKGROUND OF THE INVENTION

In the field of apparatuses for packaging substances in sachets, it is known to feed the material of which the sachets are made, generally heat-weldable and in the form of a film, so as to form the sachets and close them hermetically by means of welding. The welds that close the sachets provide a longitudinal weld along the respective opposite edges of the sachets, and which longitudinally closes the sachets along their entire length, and two transverse welds, which close the sachets in correspondence with both their ends. The longitudinal and transverse directions are to be understood relative to the direction of feed of the film of heat-weldable material.

Methods for welding film of heat-weldable material to make sachets are known, for example, from patent documents US 2015/251782 A1 and JP 2007 039050 A.

The welding steps are critical, as they condition the airtightness of the sachets, which can be fundamental depending on the type of substance packaged. Consider, for example, pharmaceutical or cosmetic products, whose properties must be preserved from any type of pollution or contamination from the external environment.

The biggest problems are usually found in transverse welds.

In the case of the units for forming and filling sachets that is the object of the present description, the film of heat-weldable material that reaches the welding unit has already been welded longitudinally, that is, the sachets are already delimited in the longitudinal direction with respect to the direction of feed of the film. Usually, the film is divided into an even number of sachets, so as to obtain a predetermined number of pairs of sachets, ultimately resulting in a configuration of sachets coupled in pairs.

During the transverse welding of the film, it is provided to clamp a plurality of pairs of sachets with a single welding head which, as is known, covers the entire width of the film of heat-weldable material.

One disadvantage deriving from the fact of welding a plurality of pairs of sachets with a single welding head is that air remains trapped inside the sachets. As a result, the sachets thus obtained are swollen, and therefore take up more space, especially inside the cartons in which they are packaged for transport. Another undesirable effect of swelling is that it makes the sachets unstable, complicating the steps of stacking the sachets.

Another disadvantage due to the fact of transversely welding several sachets with a single welding head is the formation of wrinkles in correspondence with the longitudinal welds already performed. Wrinkles are most frequently formed in correspondence with the longitudinal welds that separate two sachets of the same pair, but are also present in correspondence with the welds which separate two adjacent pairs of sachets.

Wrinkles are problematic as they are preferential points for breakages and openings of the sachets when they have been filled and sealed.

The onset of these disadvantages is due to the fact that the film of heat-weldable material is not well stretched in the transverse direction when transverse heat-welding is performed.

There is therefore a need to perfect a welding unit for a unit for forming and filling sachets that can overcome at least one of the disadvantages of the state of the art.

In particular, one purpose of the present invention is to provide a welding unit which allows to reduce the presence of air trapped in the sachets when they are closed.

Another purpose of the present invention is to provide a welding unit which is able to reduce, if not eliminate, the formation of wrinkles along the transverse weld of the film of heat-weldable material.

Another purpose is to perfect a method for forming sachets which allows to reduce the presence of air trapped inside the sachets.

Yet another purpose is to perfect a method for forming sachets which allows to reduce or eliminate the formation of wrinkles during the transverse welding of the film of heat-weldable material.

Another purpose is to provide a tensioning device which allows to stretch the film from which the sachets are obtained in a direction transverse to its direction of feed.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, hereafter we describe a welding unit for a forming and filling unit, as well as a corresponding functioning method, which overcome the limits of the state of the art and eliminate the defects present therein.

In accordance with some embodiments, there is provided a transverse tensioning device, to stretch a film fed in a direction of feed comprised in a feed plane. The film is divided into a plurality of columns oriented longitudinally with respect to the direction of feed. In other words, the columns are all parallel to each other, and oriented so that their direction of longitudinal extension is parallel to the direction of feed. The tension operated by the transverse tensioning device is transverse to the direction of feed of the film. Therefore, the tension is also transverse with respect to the plurality of columns of the film.

The transverse tensioning device comprises at least one pair of transverse tensioning heads disposed symmetrically to each other with respect to the feed plane. Each transverse tensioning head comprises two contact members able to come into contact with the film, and aligned and movable in a direction of tensioning transverse to the direction of feed of the film and parallel to the feed plane of the film.

Preferably, the contact members are movable between an inactive position, in which the contact members of a same transverse tensioning head are distanced by a first distance, and a tensioning position, in which the contact members are distanced by a second distance greater than the first distance.

Advantageously, each transverse tensioning head comprises return members connected to a respective contact member, so as to keep them in the inactive position when there is no stress on them.

Advantageously, the transverse tensioning heads are configured to cause the movement of the contact members from the inactive position to the tensioning position by reciprocally moving the two transverse tensioning heads of a same pair toward each other.

More advantageously, the tensioning heads cause the movement of the contact members from the inactive position to the tensioning position, by pressing one against the other the two transverse tensioning heads of a same pair, that is, ones that are symmetrical to each other with respect to the feed plane of the film.

Preferably, the plurality of columns of the film is organized into pairs of columns. More preferably, the transverse tensioning device comprises a plurality of pairs of transverse tensioning heads, each configured to transversely stretch a respective pair of columns.

According to one aspect, there is also provided a welding unit for welding a film of thermoplastic material fed along a feed plane according to a direction of feed. The welding unit comprises a welding device, and a transverse tensioning device as indicated above, and configured to stretch the film of thermoplastic material in the feed plane and in a direction transverse with respect to the direction of feed.

Preferably, the welding device is disposed in correspondence with a welding zone, and configured to weld the film transversely to the direction of feed, and more preferably in the feed plane.

Advantageously, the transverse tensioning device is disposed in proximity to the welding device in the direction of feed of the film. More advantageously, the transverse tensioning zone is immediately downstream of the welding zone in the direction of feed of the film of thermoplastic material.

According to some embodiments, the transverse tensioning heads are configured so as to come into reciprocal contact (that is, in contact with the film) before, preferably immediately before, the welding heads come into reciprocal contact (that is, in contact with the film).

Preferably, the welding device comprises two welding heads which are symmetrical to each other with respect to the feed plane, and equipped with respective welding surfaces facing the feed plane, and the contact members of the transverse tensioning device each comprise a contact surface facing the feed plane of the film. More preferably, the transverse tensioning device is disposed so that the contact surfaces are at a distance from the feed plane lesser than or equal to the distance between the welding surfaces and the feed plane itself.

According to another aspect, there is also provided a method to weld a thermoplastic film for forming sachets, the method providing a step of tensioning in a transverse direction with respect to the direction of feed of the film, prior to the welding step itself.

The method is advantageously carried out by means of a welding unit that comprises a welding device and a transverse tensioning device. More advantageously, the method is carried out by means of a welding unit as indicated above, comprising a transverse tensioning device as indicated above.

The film is divided into a plurality of columns oriented longitudinally with respect to the direction of feed of the film.

Preferably, the method provides a step of feeding the film in the feed plane in the direction of feed; a step of tensioning the film in a direction transverse to the direction of feed; and subsequently a step of welding the film in a direction transverse to the direction of feed.

According to some embodiments, the tensioning step occurs just before the welding step.

Advantageously, the plurality of columns of the film is organized into pairs of columns, and the step of tensioning the film provides to transversly stretch each pair of columns individually. More advantageously, the transverse tensioning occurs simultaneously for all pairs of columns.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic front view of a welding unity according to some embodiments described here;
- fig. 2 is a lateral view, partly in section, of the welding unity of fig. 1;
- fig. 3 is a plan view, partly in section, of a device of the welding unit of figs. 1 and 2;
- figs. 4A, 4B and 4C are plan views of a detail of the device of fig. 3, in three successive operating configurations;
- fig. 5 is a plan view of the detail of figs. 4A-C according to a second embodiment; and
- fig. 6 is a plan view of the detail of figs. 4A-C according to a third embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one or more non-limiting examples are shown in the attached drawing/s. The phraseology and terminology used here is also for the purposes of providing non-limiting examples.

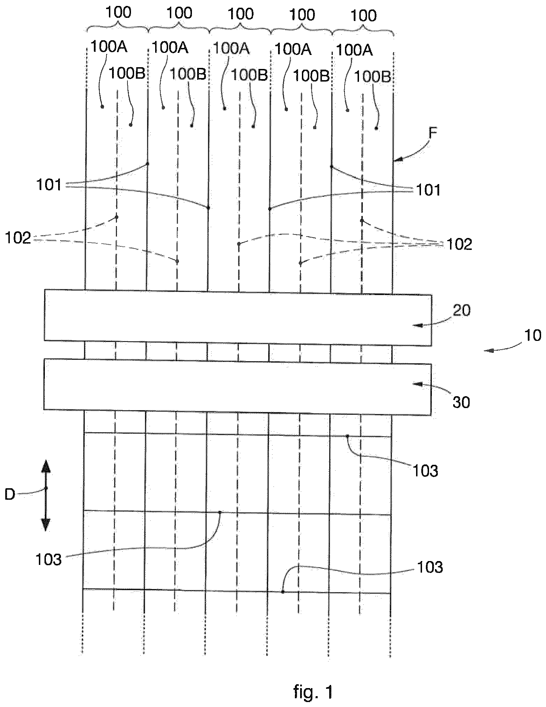

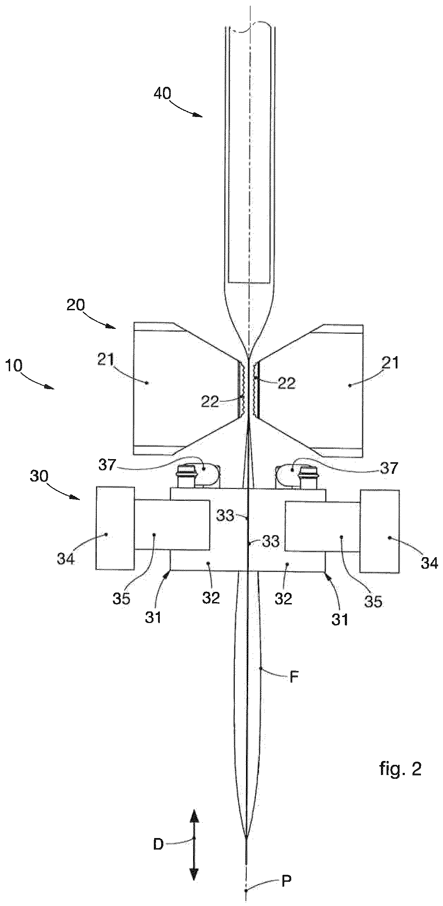

Figs. 1 and 2 schematically show a welding unit, indicated as a whole with reference number 10. The welding unit 10 is intended, in particular, to form part of a unit for forming and filling sachets of the type indicated above, in which the sachets are formed starting from a film F of thermoplastic material.

The film F is fed in a feed plane P, in a direction of feed D and according to a sense of feed. Typically, the film F is fed in a vertical plane P, in a vertical downward direction.

It should be noted that, in the following description, the directions longitudinal and transverse are to be understood with respect to the direction of feed D of the film F of thermoplastic material, unless indicated otherwise.

It should also be noted that by transverse direction we mean, preferably but not necessarily, a direction perpendicular to the direction of feed D of the film F.

When the film F reaches the welding unit 10, it comprises a plurality of longitudinal columns 100A, 100B delimited by means of corresponding longitudinal welds 101, 102. More precisely, the longitudinal welds comprise a first type 101 of weld and a second type 102 of weld. These types 101, 102 of weld are alternated so as to define, in the transverse direction, pairs 100 of columns 100A, 100B (fig. 1), five in number in the example shown.

The sachets 110 are then delimited by transverse welds 103, performed by the welding unit 10 (fig. 1), in order to be subsequently separated into pairs, by cutting the welds 101 of the first type. The transverse welds 103 are performed by means of a single welding unit 10 which operates simultaneously on the entire width of the film F.

The welding unit 10 comprises a welding device 20 located in correspondence with a welding station in the direction of feed D. The welding device 20 comprises two welding heads 21 disposed transversely to the direction of feed D and having a length greater than the width of the film F to be welded. The two welding heads 21 are symmetrical to each other with respect to the feed plane D (fig. 2).

The welding heads 21 each comprise a respective welding surface 22 facing the feed plane P and parallel to it, so as to be able to come into contact with the film F in order to perform the welding thereof. It should be noted that during the welding of the film, the welding surfaces 22 of both welding heads 21 are in reciprocal contact and are pressed one against the other, with the film F in the middle.

The welding unit 10 also comprises a transverse tensioning device 30 configured to stretch the film F transversely to the direction of feed D.

Thanks to the tensioning device 30, the film F is well stretched transversely during the transverse welding. This allows to reduce the internal volume of the sachets 101, and therefore to decrease the quantity and volume of air trapped inside them.

The fact of having the film F well stretched in the transverse direction at the time of welding also allows to prevent the formation of folds that are the cause of wrinkles, in particular in correspondence with the longitudinal welds 101, 102.

Preferably, the transverse tensioning device 30 is disposed in proximity to the welding device 20 in the direction of feed D, more preferably parallel to it. For example, the distance between the two devices 20, 30 as above is of the order of a few millimeters, preferably comprised between 2 and 10 mm. In this way, the effect of tensioning the film in correspondence with the welding device 20 is greater. Even more preferably, the transverse tensioning device 30 is disposed immediately downstream of the welding device 20, in the direction of feed D.

The transverse tensioning device 30 comprises a plurality of transverse tensioning heads 31 disposed in facing pairs and each disposed on a respective side of the feed plane P. More precisely, the two transverse tensioning heads 31 of a same pair are symmetrical to each other with respect to the feed plane P of the film F.

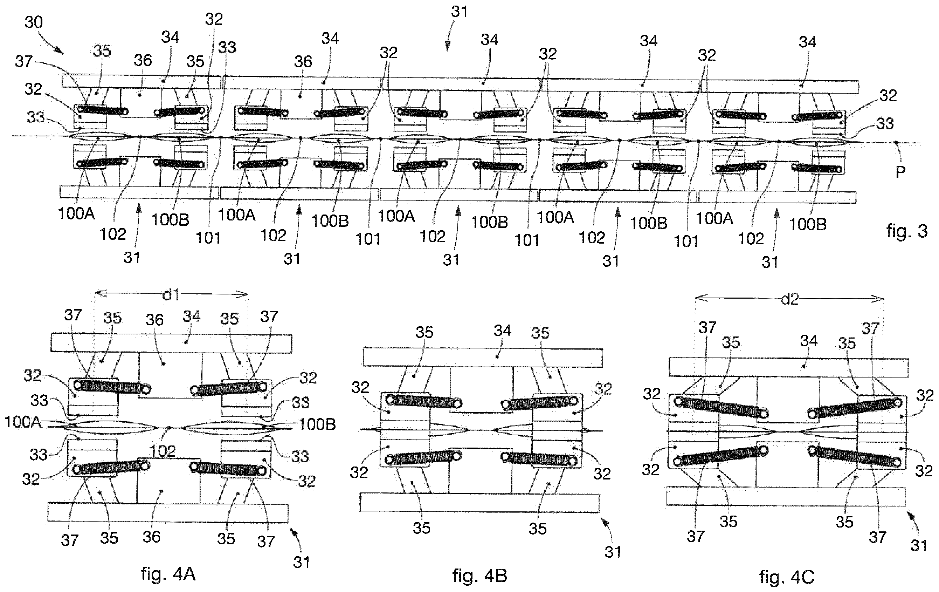

The pairs of transverse tensioning heads 31 are advantageously configured to each stretch a respective pair 100 of columns 100A, 100B (fig. 3).

Preferably, the pairs of transverse tensioning heads 31 are aligned with each other in a direction transverse to the direction of feed D of the film F.

In similar manner to the welding device 20, the transverse tensioning device 30 acts on the film F by pressing it on both of its surfaces, on each side of the feed plane P.

For both devices it is possible to define an active position, in which their heads 21, 31 are in contact with the film F, and an inactive position, in which their heads 21, 31 are not in contact with the film F, that is, they are at a distance from the film F.

In the example shown, the transverse tensioning device 30 comprises five pairs of heads 31, each operating on a respective pair 100 of columns 100A, 100B (figs. 2 and 3).

Each transverse tensioning head 31 comprises two contact members 32 aligned transversely to the direction of feed D. Each contact member 32 comprises a respective contact surface 33, disposed during use facing the feed plane P and preferably parallel thereto, so to maximize, during use, the area of contact with the film F.

Advantageously, the contact surfaces 33 are made of rubber, so as not to slip on the film F of heat-weldable material.

The contact members 32 can be translated, in the same transverse direction, between an inactive position (fig. 3 and 4A), when the transverse tensioning head 31 does not act on the film F, and a tensioning position (fig. 4C) achieved when the transverse tensioning head 31 acts on the film F, causing it to tension in the transverse direction.

The inactive and tensioning positions differ mainly in the distance between the two contact members 32 of a same transverse tensioning head 31. In the inactive position the two contact members 32, more precisely their centers, are distanced from each other by a first distance d1 (fig. 4A), while in the tensioning position they are distanced from each other by a second distance d2 (fig. 4C), greater than the first distance d1. The first d1 and the second distance d2 are intended in the transverse sense with respect to the direction of feed D of the film F.

According to some embodiments, the transverse tensioning device 30 is configured so that the contact surfaces 33 of the contact members 32 contact the film F of thermoplastic material before the welding surfaces 22 of the welding device 20 (as shown in fig. 2). This guarantees that the transverse welding of the film F takes place when the latter is already stretched.

For example, it can be provided that when the welding unit 10 is not in contact with the film F (inactive position), the contact surfaces 33 of the transverse tensioning device 30 are closer to the film F, or to the feed plane P, than the welding surfaces 22 of the welding device 20 are.

Preferably, the contact surfaces 33 of the tensioning device 30 come into contact with the film F just before the welding surfaces 22, so as to leave as much time as possible for the step of filling the sachets 110. For example, the interval of time between the contact of the two contact surfaces 33 and the contact between the two welding surfaces 22 is of the order of magnitude of a tenth of a second.

The welding unit 10 is disposed directly downstream of a station 40 for filling the sachets (fig. 2). The step of transverse tensioning of the film F follows the step of filling the sachets 110, and precedes the welding step. So as not to negatively affect the productivity of the packaging plant, it is preferable to insert the tensioning step into existing work cycles, without modifying their timings. In this case, the tensioning step is performed in the interval of time so far provided for the filling step, in partial overlap with this last step. Therefore, it is advantageous to provide that the transverse tensioning step takes place as late as possible before the welding step.

To optimize the synchronization between the welding device 20 and the transverse tensioning device 30, it is advantageous to provide that they are reciprocally connected in a fixed manner.

In the example shown, each transverse tensioning head 31 comprises a support body 34 onto which the contact members 32 are mounted translatable by means of respective levers 35. The latter are preferentially pivoted both to the support body 34 and also to their respective contact member 32. The levers 35 are preferentially comprised in a horizontal plane perpendicular to the feed plane.

The levers 35 are disposed diverging from each other, so that they can only spread apart when two facing heads 31 are pressed one against the other.

In order to keep the contact members 32 close together, that is, in the inactive position, in the absence of a stress on them (that is, in the absence of pressure on the contact surfaces 33), the contact members 32 are connected to a central block 36 by means of return members 37, in this case some springs (figs. 3 and 4A). The central block 36 is disposed between the two levers 35 and is attached to the support body 34.

The first distance d1 between the contact members 32, corresponding to the inactive position, is advantageously such that the two contact members 32 each contact a longitudinal part of the columns 100A, 100B of a same pair 100 of columns of the film F in proximity of the first longitudinal welds 101 (fig. 3). In other words, each transverse tensioning head 31 is configured to transversely stretch a respective pair 100 of columns 100A, 100B.

The functioning of the welding unit 10 described above is as follows.

When the film F reaches the welding unit 10, which is disposed directly downstream of the filling station 40, the columns 100A, 100B are already provided with a bottom materialized by the last transverse weld 103 performed, and a quantity of substance to be enclosed in the sachets 110 has already been delivered into the portion comprised between such last transverse weld 103 and the welding unit 10.

At this point, the welding unit 10 is activated to perform a new transverse weld 103, closing a series of sachets 110, in the example shown ten sachets 110 distributed into five pairs in a transverse direction.

The activation of the welding unit 10 determines the, preferably simultaneous, movement of approach of the welding heads 21 and of the transverse tensioning heads 31 toward the feed plane P, that is, toward the film F of thermoplastic material.

At this point, before coming into contact with the film F, the contact members 32 of the transverse tensioning heads 31 are in the inactive position (fig. 4A).

Due to the smaller distance between the contact surfaces 33 of the transverse tensioning device 30 and the film F, compared to the welding surfaces 22 of the welding device 20, the contact surfaces 33 come into contact with the film F before the welding surfaces 22 (figs. 2 and 4B). When the contact surfaces 33 of one transverse tensioning head 31 come into contact with the film F, they also simultaneously come into contact with the contact surfaces 33 of the symmetrical transverse tensioning head 31 (fig. 4B).

At the moment of the first contact between them and with the film F, but before the two tensioning heads 31 begin to press one against the other, the contact members 32 are still in the inactive position (fig. 4B).

Following the first contact referred to above, the welding unit continues its advance toward the film F, so that the welding surfaces 22 can also come into contact with, and thus weld, the film F. This further advance causes the transverse tensioning heads 31 of a same pair to be pressed one against the other.

This pressure causes the levers 35 to spread apart, and therefore a reciprocal distancing of the contact members 32 of a same transverse tensioning head 31, in the transverse direction of alignment of the contact members 32 themselves. The distancing of the contact members 32 results in a stretching of the film F between them, and therefore a tensioning of the film F in a direction transverse to the direction of feed D.

The advance of the welding unit 10 toward the film F continues until the welding surfaces 22 in turn come into contact with the film F and determine the transverse weld 103. At this point, the contact members 32 are distanced as far as possible, and the distance between them corresponds to the second distance d2 indicated above (fig. 4C). The transverse tension caused on the film F is maximum.

It should be noted that the transverse tensioning caused on the film F by the transverse tensioning heads 31 begins before the welding and progressively increases between the first contact of the same transverse tensioning heads 31 with the film F and the welding step, which is determined by the contact between the welding heads 21 and the film F.

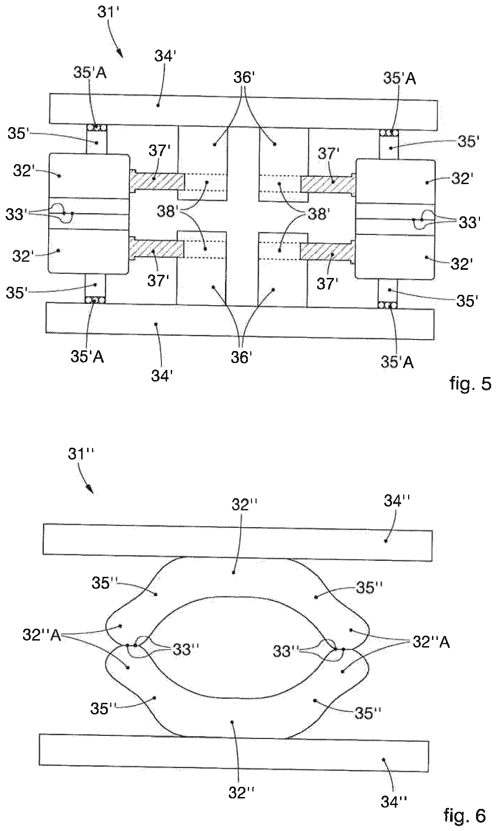

With reference to fig. 5, a second embodiment of the welding unit is described. The parts in common with the first embodiment are not described again, and are numbered with the same reference numbers, to which a single quote mark has been added.

The welding unit 10' of the second embodiment differs from that of the first embodiment for the structure of the transverse tensioning head 3 1'.

In it, the return members comprise pistons 37' attached to a respective contact member 32' in correspondence with its face oriented toward the central block 36'.

The transverse tensioning heads 31' also comprise seatings 38', or liners, for the pistons 37'. These seatings 38' are made in the central block 36' (fig. 5).

In this embodiment, the levers 35' are not hinged but mounted slidingly in the support body 34'. For this purpose, the levers 35' are equipped with respective sliding members 35'A, for example castors.

We wish to point out that it is possible to combine the return members 37, 37' of one of these embodiments with the levers 35, 35' of the other.

It should also be noted that in the second embodiment each transverse tensioning head 31' comprises two separate central blocks 36'; however, it is possible to provide a single central block 36' in which the liners 38' are made. Vice versa, in the first embodiment it is possible to provide two separate central blocks.

The functioning of the welding unit 10' according to the second embodiment is identical to that described for the first embodiment, with the exception that the pistons 37' are actuated, for example in a pneumatic or hydraulic manner, in order to determine the movement in the transverse direction of the contact members 32', and consequently of the levers 35' connected thereto.

With reference to fig. 6, a third embodiment of the invention is described. The parts common with the first embodiment are not described again and have the same numbering, to which however a double quote mark has been added.

The welding unit 10" of the third embodiment differs from the first embodiment only for the structure of the transverse tensioning head 31", which comprises a single flexible contact body 32" directly attached to the support body 34". The flexible body is elastically deformable.

The flexible contact body 32" is a substantially U-shaped, the two free ends 32"A of which, in particular their surfaces 33", are intended to come into contact with the film F and cause its transverse tensioning (fig. 6).

Preferably, the flexible contact body 32" is made of rubber. It has two arms 35" which, in the absence of stress, are diverging. Due to their material and their thickness, the 35" arms are able to deform elastically when two transverse tensioning heads 31" of a same pair are pressed one against the other. Such pressure causes the distancing of the free ends 32"A and the consequent tensioning of the film F in a direction transverse to the direction of feed D.

It is clear that modifications and/or additions of parts or steps may be made to the welding unit and to the corresponding functioning method as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Transverse tensioning device, to stretch a film (F), fed in a feed plane (P) in a direction of feed (D), in a direction transverse to said direction of feed (D), said film (F) being divided into a plurality of columns (100A, 100B) oriented longitudinally with respect to said direction of feed (D), **characterized in that** it comprises at least one pair of transverse tensioning heads (31, 31', 31") disposed symmetrically to each other with respect to said feed plane (P) and each comprising two contact members (32, 32', 32") able to enter into contact with said film (F) of heat-weldable material, said contact members (32, 32', 32") being aligned and movable in a direction transverse to said direction of feed and parallel to said feed plane (P).

2. Transverse tensioning device as in claim 1, **characterized in that** the contact members (32, 32', 32") are movable between an inactive position, in which said contact members (32, 32', 32") of a same transverse tensioning head (31, 31', 31") are reciprocally distanced by a first distance (d1), and a tensioning position, in which said contact members (32, 32', 32") of a same transverse tensioning head (31, 31', 31") are reciprocally distanced by a second distance (d2) greater than said first distance (d1).

3. Transverse tensioning device as in claim 2, **characterized in that** the tensioning heads (31, 31', 31") are configured to cause the movement of the contact members (32, 32', 32") by pressing two of said transverse tensioning heads (31, 31', 31"), symmetrical with respect to the feed plane (P), one against the other.

4. Device as in claim 2 or 3, **characterized in that** the columns (100A, 100B) are organized into pairs (100) of columns (100A, 100B), **and in that** the transverse tensioning device (30, 30', 30") comprises a plurality of pairs of transverse tensioning heads (31, 31', 31"), each configured to stretch transversely a respective pair (100) of columns (100A, 100B).

5. Welding unit for a unit for forming and filling sachets, wherein said sachets are obtained from a film (F) of heat-weldable material fed in a feed plane (P) in a direction of feed (D), said welding unit (10, 10', 10") comprising a welding device (20, 20', 20") of the film (F) of heat-weldable material configured to weld said film (F) in a direction transverse to said direction of feed (D), **characterized in that** it comprises a transverse tensioning device (30, 30', 30") as in any claim from 1 to 4.

6. Welding unit as in claim 5, **characterized in that** the transverse tensioning device (30, 30', 30") is disposed in proximity to the welding device (20, 20', 20") in the direction of feed (D).

7. Welding unit as in claim 6, **characterized in that** the transverse tensioning device (30, 30', 30") is disposed directly downstream of the welding device (20, 20', 20") in the direction of feed (D).

8. Welding unit as in any of the claims from 5 to 7, **characterized in that** the welding device (20, 20', 20") comprises two welding heads (21, 21', 21") disposed symmetrical with respect to the feed plane (P) and each comprising a welding surface (22, 22', 22") facing said feed plane, and the contact members (32, 32', 32") of the transverse tensioning device (31, 3 1', 31") each comprise a contact surface (33, 33', 33") facing said feed plane (P), **and in that** the transverse tensioning device (31, 31', 31") is disposed so that the contact surfaces (33, 33', 33") are at a distance, with respect to the feed plane (P), lesser than or equal to the distance between the welding surfaces (22, 22', 22") and the feed plane (P) itself.

9. Method to weld a film (F) of heat-weldable material and divided into a plurality of columns (100A, 100B), by means of a welding unit (10, 10', 10") as in any claim from 5 to 8, comprising the steps of
a. feeding a film (F) of heat-weldable material in a feed plane (P) in a direction of feed (D), said columns (100A, 100B) being longitudinal to said direction of feed (D);
b. stretching said film (F) of heat-weldable material in a direction transverse to said direction of feed (D); and subsequently
c. welding said film (F) of heat-weldable material in a direction transverse to said direction of feed (D).

10. Method as in claim 9, **characterized in that** the step of tensioning the film (F) of heat-weldable material takes place just before the step of welding said film (F).

11. Method as in claim 9 or 10, **characterized in that** the plurality of columns (100A, 100B) is organized into pairs (100) of columns (100A, 100B), **and in that** the step of tensioning the film (F) provides to transversely stretch each pair (100) of longitudinal columns (100A, 100B) individually.

## Patentansprüche

1. Querspannvorrichtung, um eine Folie (F), die in einer Zuführebene (P) in einer Zuführrichtung (D) zugeführt wird, in einer Richtung quer zu der Zuführrichtung (D) zu spannen, wobei die Folie (F) in eine Mehrzahl von Spalten (100A, 100B) unterteilt ist, die bezüglich der Zuführrichtung (D) längs orientiert sind, **dadurch gekennzeichnet, dass** sie wenigstens ein Paar von Querspannköpfen (31, 31', 31") aufweist, die bezüglich der Zuführebene (P) symmetrisch zueinander angeordnet sind und von denen jeder zwei Kontaktelemente (32, 32', 32") aufweist, die imstande sind, in Kontakt mit der Folie (F) aus wärmeschweißbaren Material zu treten, wobei die Kontaktelemente (32, 32', 32") in einer Richtung quer zu der Zuführrichtung und parallel zu der Zuführebene (P) ausgerichtet und bewegbar sind.

2. Querspannvorrichtung gemäß Anspruch 1, **dadurch gekennzeichnet, dass** die Kontaktelemente (32, 32', 32") bewegbar sind zwischen einer Inaktivposition, in welcher die Kontaktelemente (32, 32', 32") eines selben Querspannkopfs (31, 31', 31") gegenseitig im Abstand sind um eine erste Distanz (d1), und einer Spannposition, in welcher die Kontaktelemente (32, 32', 32") eines selben Querspannkopfs (31, 31', 31") gegenseitig im Abstand sind um eine zweite Distanz (d2), die größer als die erste Distanz (d1) ist.

3. Querspannvorrichtung gemäß Anspruch 2, **dadurch gekennzeichnet, dass** die Spannköpfe (31, 31', 31") eingerichtet sind, um die Bewegung der Kontaktelemente (32, 32', 32") zu bewirken durch Drücken zweier der Querspannköpfe (31, 31', 31"), die symmetrisch bezüglich der Zuführebene (P) sind, gegeneinander.

4. Vorrichtung gemäß Anspruch 2 oder 3, **gekennzeichnet dadurch, dass** die Spalten (100A, 100B) in Paaren (100) von Spalten (100A, 100B) organisiert sind, **und dadurch, dass** die Querspannvorrichtung (30, 30', 30") eine Mehrzahl von Paaren von Querspannköpfen (31, 31', 31") aufweist, von denen jedes eingerichtet ist, um ein jeweiliges Paar (100) von Spalten (100A, 100B) quer zu spannen.

5. Schweißeinheit für eine Einheit zum Bilden und Füllen von Beuteln, wobei die Beutel aus einer Folie (F) aus wärmeschweißbarem Material erlangt sind, die in einer Zuführebene (P) in einer Zuführrichtung (D) zugeführt wird, wobei die Schweißeinheit (10, 10', 10") eine Schweißvorrichtung (20, 20', 20") der Folie (F) aus wärmeschweißbarem Material aufweist, die eingerichtet ist, um den Film (F) in einer Richtung quer zur Zuführrichtung (D) zu schweißen, **dadurch gekennzeichnet, dass** sie eine Querspannvorrichtung (30, 30', 30") gemäß irgendeinem Anspruch von 1 bis 4 aufweist.

6. Schweißeinheit gemäß Anspruch 5, **dadurch gekennzeichnet, dass** die Querspannvorrichtung (30, 30', 30") in der Zuführrichtung (D) in der Nähe der Schweißvorrichtung (20, 20', 20") angeordnet ist.

7. Schweißeinheit gemäß Anspruch 6, **dadurch gekennzeichnet, dass** die Querspannvorrichtung (30, 30', 30") in der Zuführrichtung (D) direkt stromabwärts von der Schweißvorrichtung (20, 20', 20") angeordnet ist.

8. Schweißeinheit gemäß irgendeinem der Ansprüche 5 bis 7, **gekennzeichnet dadurch, dass** die Schweißvorrichtung (20, 20', 20") zwei Schweißköpfe (21, 21', 21") aufweist, die bezüglich der Zuführebene (P) symmetrisch angeordnet sind und von denen jeder eine Schweißfläche (22, 22', 22") aufweist, die der Zuführebene (P) zugewandt ist, wobei die Kontaktelemente (32, 32', 32") der Querspannvorrichtung (31, 31', 31") jeweils eine Kontaktfläche (33, 33', 33") aufweisen, die der Zuführebene (P) zugewandt ist, **und dadurch, dass** die Querspannvorrichtung (31, 31', 31") derart angeordnet ist, dass die Kontaktflächen (33, 33', 33") bezüglich der Zuführebene (P) in einem Abstand sind, der kleiner als oder gleich dem Abstand zwischen den Schweißflächen (22, 22', 22") und der Zuführebene (P) ihrerseits ist.

9. Verfahren zum Schweißen einer Folie (F) aus wärmeschweißbarem Material, die in eine Mehrzahl von Spalten (100A, 100B) unterteilt ist, mittels einer Schweißeinheit (10, 10', 10") gemäß irgendeinem Anspruch von 5 bis 8, aufweisend die Schritte
a. Zuführen einer Folie (F) aus wärmeschweißbarem Material in einer Zuführebene (P) in einer Zuführrichtung (D), wobei die Spalten (100A, 100B) längs zur Zuführrichtung (D) sind,
b. Spannen der Folie (F) aus wärmeschweißbarem Material in einer Richtung quer zur Zuführrichtung (D), und nachfolgendes
c. Schweißen der Folie (F) aus wärmeschweißbarem Material in einer Richtung quer zur Zuführrichtung (D).

10. Verfahren gemäß Anspruch 9, **dadurch gekennzeichnet, dass** der Schritt des Spannens der Folie (F) aus wärmeschweißbarem Material stattfindet unmittelbar vor dem Schritt des Schweißens der Folie (F).

11. Verfahren gemäß Anspruch 9 oder 10, **gekennzeichnet dadurch, dass** die Mehrzahl von Spalten (100A, 100B) in Paaren (100) von Spalten (100A, 100B) organisiert ist, **und dadurch, dass** der Schritt des Spannens der Folie (F) bereitstellt, jedes Paar (100) von Längs-Spalten (100A, 100B) individuell quer zu spannen.

## Revendications

1. Dispositif de mise en tension transversale, pour étirer un film (F), alimenté dans un plan d'alimentation (P) dans une direction d'alimentation (D), dans une direction transversale à ladite direction d'alimentation (D), ledit film (F) étant divisé en une pluralité de colonnes (100A, 100B) orientées longitudinalement par rapport à ladite direction d'alimentation (D), **caractérisé en ce qu'**il comprend au moins une paire de têtes de mise en tension transversale (31, 31', 31") disposées symétriquement l'une par rapport à l'autre par rapport audit plan d'alimentation (P) et comprenant chacune deux éléments de contact (32, 32', 32") capables d'entrer en contact avec ledit film (F) de matériau thermosoudable, lesdits éléments de contact (32, 32 ', 32") étant alignés et mobiles dans une direction transversale à ladite direction d'alimentation et parallèle audit plan d'alimentation (P).

2. Dispositif de mise en tension transversale selon la revendication 1, **caractérisé en ce que** les éléments de contact (32, 32 ', 32") sont mobiles entre une position inactive, dans laquelle lesdits éléments de contact (32, 32', 32") d'une même tête de mise en tension transversale (31, 31', 31") sont mutuellement espacés d'une première distance (d1), et une position de mise en tension, dans laquelle lesdits éléments de contact (32, 32', 32") d'une même tête de mise en tension transversale (31, 31', 31") sont mutuellement espacés d'une seconde distance (d2) supérieure à ladite première distance (d1).

3. Dispositif de mise en tension transversale selon la revendication 2, **caractérisé en ce que** les têtes de mise en tension (31, 31 ', 31") sont configurées pour provoquer le déplacement des éléments de contact (32, 32', 32") en pressant deux desdites têtes de mise en tension transversale (31, 31', 31"), symétriques par rapport au plan d'alimentation (P), l'une contre l'autre.

4. Dispositif selon la revendication 2 ou 3, **caractérisé en ce que** les colonnes (100A, 100B) sont organisées en paires (100) de colonnes (100A, 100B), **et en ce que** le dispositif de mise en tension transversale (30, 30', 30") comprend une pluralité de paires de têtes de mise en tension transversale (31, 3 1', 31"), configurées chacune pour étirer transversalement une paire respective (100) de colonnes (100A, 100B).

5. Unité de soudage pour une unité de formation et de remplissage de sachets, dans laquelle lesdits sachets sont obtenus à partir d'un film (F) de matériau thermosoudable alimenté dans un plan d'alimentation (P) dans une direction d'alimentation (D), ladite unité de soudage (10, 10', 10") comprenant un dispositif de soudage (20, 20', 20") du film (F) de matériau thermosoudable configuré pour souder ledit film (F) dans une direction transversale à ladite direction d'alimentation (D), **caractérisé en ce qu'**il comprend un dispositif de mise en tension transversale (30, 30', 30") selon l'une quelconque des revendications 1 à 4.

6. Unité de soudage selon la revendication 5, **caractérisée en ce que** le dispositif de mise en tension transversale (30, 30 ', 30") est disposé à proximité du dispositif de soudage (20, 20', 20") dans la direction d'alimentation (D).

7. Unité de soudage selon la revendication 6, **caractérisée en ce que** le dispositif de mise en tension transversale (30, 30', 30") est disposé directement en aval du dispositif de soudage (20, 20', 20") dans la direction d'alimentation (D).

8. Unité de soudage selon l'une quelconque des revendications 5 à 7, **caractérisée en ce que** le dispositif de soudage (20, 20', 20") comprend deux têtes de soudage (21, 21', 21") disposées symétriquement par rapport au plan d'alimentation (P) et comprenant chacune une surface de soudage (22, 22', 22") faisant face audit plan d'alimentation, et les éléments de contact (32, 32', 32") du dispositif de mise en tension transversale (31, 31', 31") comprennent chacun une surface de contact (33, 33', 33") faisant face audit plan d'alimentation (P), **et en ce que** le dispositif de mise en tension transversale (31, 31', 31") est disposé de telle sorte que les surfaces de contact (33, 33', 33") sont à une distance, par rapport au plan d'alimentation (P), inférieure ou égale à la distance entre les surfaces de soudage (22, 22', 22") et le plan d'alimentation (P) luimême.

9. Procédé de soudage d'un film (F) de matériau thermosoudable et divisé en une pluralité de colonnes (100A, 100B), au moyen d'une unité de soudage (10, 10', 10") selon l'une quelconque des revendications 5 à 8, comprenant les étapes consistant à
a. alimenter un film (F) de matériau thermosoudable dans un plan d'alimentation (P) dans une direction d'alimentation (D), lesdites colonnes (100A, 100B) étant longitudinales par rapport à ladite direction d'alimentation (D) ;
b. étirer ledit film (F) de matériau thermosoudable dans une direction transversale à ladite direction d'alimentation (D) ; et ensuite
c. souder ledit film (F) de matériau thermosoudable dans une direction transversale à ladite direction d'alimentation (D).

10. Procédé selon la revendication 9, **caractérisé en ce que** l'étape de mise en tension du film (F) de matériau thermosoudable a lieu juste avant l'étape de soudage dudit film (F).

11. Procédé selon la revendication 9 ou 10, **caractérisé en ce que** la pluralité de colonnes (100A, 100B) est organisée en paires (100) de colonnes (100A, 100B), **et en ce que** l'étape de mise en tension du film (F) prévoit d'étirer transversalement chaque paire (100) de colonnes longitudinales (100A, 100B) individuellement.
